# EUROPÄISCHE PATENTSCHRIFT

(11) **EP 0 803 055 B1**
(45) Veröffentlichungstag und Bekanntmachung des Hinweises auf die Patenterteilung: **13.12.2000**
(21) Anmeldenummer: 96900308.6
(22) Anmeldetag: 09.01.1996
(51) Int. Cl.: G01M 3/38, G01M 3/24

(54) **Photoakustische Dichtheitsprüfung mit geregeltem Laser**
Photoacoustic tightness check with controlled laser
Contrôle d'étanchéité photoacoustique avec un laser réglé

(30) Priorität: 14.01.1995 DE 19500947
(43) Veröffentlichungstag der Anmeldung: 29.10.1997
(73) Patentinhaber: Schroff, Gerhart, 71116 Gärtringen (DE); Stetter, Michael, D-73630 Remshalden (DE)
(72) Erfinder: Schroff, Gerhart, 71116 Gärtringen (DE); Stetter, Michael, D-73630 Remshalden (DE)
(74) Vertreter: Wolf, Eckhard, Dr.-Ing.
(86) Internationale Anmeldenummer: EP9600065
(87) Internationale Veröffentlichungsnummer: WO9621850

(56) Entgegenhaltungen:
- WO-A-86/04746
- US-A- 4 457 162
- US-A- 4 979 820
- US-A- 5 161 408

## Beschreibung

Die Erfindung betrifft ein Verfahren und eine Anordnung zur Dichtheitsprüfung von Behältern, Gehäusen und dergleichen Prüfobjekten der im Oberbegriff der Ansprüche 1 und 13 angegebenen Gattung.

Bei einem bekannten Verfahren zur Dichtheitsprüfung von Behältern (US-5,161,408) wird das Prüfobjekt mit einem unter Druck stehenden Testgas beaufschlagt und das bei Vorhandensein eines Lecks aus dem Prüfobjekt entweichende Testgas in einem Untersuchungsvolumen einem von einem Laser emittierten, intensitätsmodulierten elektromagnetischen Wellenfeld ausgesetzt, das Frequenzanteile enthält, die von dem Testgas unter Erzeugung eines der Leckerkennung dienenden photoakustischen Signals absorbiert werden. Wird das Laserlicht mit einer auf eine Absorptionsfrequenz des Testgases abgestimmten Frequenz in das Untersuchungsvolumen eingestrahlt, so wird ein Teil der Moleküle des Testgases durch Absorption der elektromagnetischen Wellen in einen energetisch angeregten Zustand gebracht. Durch Stöße mit anderen Molekülen in dem Untersuchungsvolumen können die angeregten Moleküle ihre Anregungsenergie ganz oder teilweise abgeben und in Translations-, Rotations- und Schwingungsenergie der Stoßpartner umwandeln. Die Erhöhung der Translationsenergie der im Untersuchungsvolumen vorhandenen Moleküle bedeutet eine Temperaturerhöhung und damit einen Druckanstieg. Wird das in das Untersuchungsvolumen eingestrahlte Wellenfeld periodisch in der Intensität verändert, so ergeben sich periodische Druckschwankungen, die mittels eines Drucksensors oder eines Schallsensors nachgewiesen werden können. Als Testgas kommt beispielsweise Schwefel-Hexafluorid (SF₆) und als Laser ein CO₂ -Laser in Betracht. Bei dem bekannten Verfahren wird der photoakustische Effekt zur Lokalisierung eines Lecks an der Oberfläche des Prüfobjekts ausgenutzt. Damit ist jedoch noch keine quantitative Bestimmung der Leckgröße möglich.

Ausgehend hiervon liegt der Erfindung die Aufgabe zugrunde, ein Verfahren und eine Anordnung zur Dichtheitsprüfung der eingangs angegebenen Art zu entwickeln, womit eine quantitative Leckmessung mit relativ geringem Aufwand durchgeführt werden kann.

Zur Lösung dieser Aufgabe werden die in den Ansprüchen 1 und 13 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von der Erkenntnis aus, daß schon geringe Änderungen in der Lasertemperatur zu sprunghaften Änderungen in der Modenstruktur führen können, die eine quantitative Auswertung photoakustischer Signale hinsichtlich der vorhandenen Testgaskonzentration erschweren oder unmöglich machen. Um diesen Nachteil zu vermeiden, wird gemäß der Erfindung vorgeschlagen, daß die Temperatur des Lasers auf einen Temperatursoliwert eingeregelt wird und gegebenenfalls auch die Anregungsleistung des Lasers im zeitlichen Mittel konstant gehalten wird, so daß das photoakustische Signal als Maß für die Testgaskonzentration im Untersuchungsvolumen und/oder für die Größe eines Lecks gemessen und ausgewertet werden kann. Damit ist erstmals eine quantitative Auswertung der photoakustischen Signale auch bei Verwendung von longitudinal multimodigen Lasern mit mehreren im Testgas absorbierbaren Lasermoden möglich. Man ist nicht mehr auf die technisch sehr viel aufwendigeren und voluminöseren frequenzstabilisierten, monomodigen Laserquellen angewiesen.

Das elektromagnetische Wellenfeld kann durch periodisches Ausblenden eines vom Laser emittierten Laserstrahls oder durch Pulsen der Anregungsleistung intensitätsmoduliert werden.

Mit dem erfindungsgemäßen Verfahren ist es außerdem mit einfachen Mitteln möglich, die Modenstruktur und damit den Emissionsfrequenzbereich des Lasers durch Veränderung des Temperatursollwerts zu variieren. Damit kann bei der Bestimmung der Testgaskonzentration der Einfluß von Fremdgasen, die das Laserlicht absorbieren, eliminiert werden.

Eine bevorzugte Ausgestaltung der Erfindung sieht vor, daß zusätzlich ein Referenzvolumen mit vorgegebener Testgaskonzentration dem vom Laser emittierten, intensitätsmodulierten Wellenfeld ausgesetzt wird, und daß das in dem Referenzvolumen erzeugte photoakustische Signal gemessen und zusammen mit dem im Untersuchungsvolumen gemessenen, photoakustisch erzeugten Signal zur Bestimmung der Testgaskonzentration im Untersuchungsvolumen und/oder der Größe eines Lecks im Prüfobjekt ausgewertet wird. Das im Referenzvolumen erzeugte photoakustische Signal ist ein indirektes Maß für den aktuellen Betriebszustand (Emissionsfrequenzen) des Lasers und kann zur Bildung eines Normierungsfaktors bei der Bestimmung der Testgaskonzentration aus dem photoakustischen Signal des Untersuchungsvolumens herangezogen werden.

Eine weitere bevorzugte Ausgestaltung der Erfindung sieht vor, daß zusätzlich ein Referenzvolumen mit vorgegebener Testgaskonzentration dem vom Laser emittierten, intensitätsmodulierten Wellenfeld ausgesetzt wird, und daß die Intensität des im Referenzvolumen erzeugten photoakustischen Signals gemessen und unter Nachführung des Temperatursollwerts des Lasers auf einen vorgegebenen Arbeitspunkt eingeregelt wird. Zur Einstellung des Arbeitspunkts kann vor der Auslösung des Nachführungsvorgangs der Temperatursollwert des Lasers variiert und dabei die Temperaturcharakteristik des im Referenzvolumen erzeugten photoakustischen Signals ermittelt werden, wobei auf der so ermittelten Temperaturcharakteristik ein Arbeitspunkt für den Nachführungsvorgang festgelegt wird. Als Arbeitspunkt kann beispielsweise das durch Variation des Temperatursollwerts erzielbare Intensitätsmaximum des im Referenzvolumen erzeugten photoakustischen Signals gewählt werden, wobei der Temperatursoliwert zweckmäßig niedriger als die Umgebungstemperatur gewählt wird.

Die photoakustisch erzeugten Signale werden vorteilhafterweise in einem beispielsweise als Mikrofon ausgebildeten Schallsensor in elektrische Ausgangssignale umgewandelt und unter Bestimmung ihrer Intensität ausgewertet.

Ein Prüfobjekt, dessen Dichtheit überprüft werden soll, kann in eine abgedichtete Testkammer eingebracht werden. Bei Beaufschlagung der Innenseite des Prüfobjekts mit dem Testgas entsteht im Falle einer Undichtheit ein Leckfluß, über den Spuren des Testgases in die Testkammer gelangen. Zum Nachweis des Testgases wird der Gasinhalt der Testkammer einer Nachweiskammer zugeführt (Integraltest). Eine Lecklokalisierung kann dadurch durchgeführt werden, daß Umgebungsgas von der Oberfläche des Prüfobjekts über eine Kapillare (Prüfsonde) angesaugt und in eine Nachweiskammer eingebracht wird.

Die Anordnung zur Durchführung des erfindungsgemäßen Verfahrens enthält somit eine Nachweiskammer zur Aufnahme von im Leckfalle Testgas enthaltenden Umgebungsgasen des jeweiligen Prüfobjekts, einen Laser zur Erzeugung eines die Nachweiskammer durchsetzenden, intensitätsmodulierten Laserstrahls, einen in der Nachweiskammer angeordneten Schallsensor zur Messung von in der Nachweiskammer erzeugten photoakustischen Signalen, einen Regelkreis zur Regelung der Temperatur des Lasers nach Maßgabe eines vorgegebenen Temperatursollwerts und vorzugsweise eine Einrichtung zur Einstellung einer im zeitlichen Mittel konstanten Anregungsleistung für den Laser.

Vorteilhafterweise enthält der Temperaturregelkreis mindestens ein auf der Laseroberfläche angeordnetes, vorzugsweise als Peltier-Element ausgebildetes thermoelektrisches Element als Stellglied.

Zur Verbesserung der Meßgenauigkeit kann zusätzlich eine von dem intensitätsmodulierten Laserstrahl durchsetzte Referenzkammer zur Aufnahme von Testgas in definierter Konzentration vorgesehen werden, in der ein weiterer Schallsensor zur Messung von photoakustischen Signalen angeordnet ist. Die Ausgangssignale der Schallsensoren können in einer vorzugsweise computergestützten Auswerteeinrichtung zur Bestimmung der Testgaskonzentration in der Nachweiskammer und/oder der Größe eines Lecks im Prüfobjekt ausgewertet werden.

Zur weiteren Steigerung der Meßgenauigkeit ist gemäß einer bevorzugten Ausgestaltung der Erfindung ein Regelkreis zur Nachführung des Temperatursollwerts des Lasers nach Maßgabe einer Abweichung der Intensität des am Schallsensor der Referenzkammer abgegriffenen Ausgangssignals vom Intensitätswert eines vorgegebenen Arbeitspunkts vorgesehen. Um eine möglichst hohe Nachweisempfindlichkeit zu erzielen, kann als Arbeitspunkt das als Funktion der Lasertemperatur erzielbare Intensitätsmaximum des in der Referenzkammer erzeugten photoakustischen Signals gewählt werden.

Die Referenzkammer und die Nachweiskammer sind zweckmäßig gleich aufgebaut und weisen das gleiche Innenvolumen auf. Zur Erzielung konstanter Beleuchtungsverhältnisse sollte die Nachweiskammer im Strahlengang des Laserstrahls hinter der Referenzkammer angeordnet werden.

Zur Optimierung des Regelverhaltens enthält der Temperaturregelkreis und/oder der Temperatursollwert-Regelkreis zweckmäßig einen PID-Regler.

Zur Durchführung eines Integraltests wird bevorzugt folgende Merkmalskombination vorgeschlagen:
- Eine einen Einlaß und einen Auslaß aufweisende Testkammer zur Aufnahme des mit dem Testgas beaufschlagbaren Prüfobjekts,
- ein auf der Einlaßseite der Testkammer angeordnetes, eingangsseitig mit Umgebungsluft oder einem Spülgas beaufschlagbares Einlaßventil,
- eine auf der Auslaßseite der Testkammer angeordnete Vakuumpumpe,
- zwei zwischen der Testkammer und der Vakuumpumpe hintereinander angeordnete Absperrventile,
- und eine das testkammerseitige Absperrventil überbrückende, an die Nachweiskammer angeschlossene Bypassleitung.

Im folgenden wird die Erfindung anhand der Zeichnung näher erläutert. Es zeigen
- Fig. 1: ein Blockschaltbild des optischen Teils eines photoakustischen Lecktestsystems mit temperaturgeregeltem Laser und konstantem Temperatursollwert;
- Fig. 2: ein gegenüber Fig. 1 abgewandeltes Ausführungsbeispiel eines photoakustischen Lecktestsystems mit temperaturgeregeltem Laser und nachgeführtem Temperatursollwert;
- Fig. 3: eine schematische Darstellung eines kompletten Dichtheitsprüfsystems nach dem photoakustischen Prinzip.

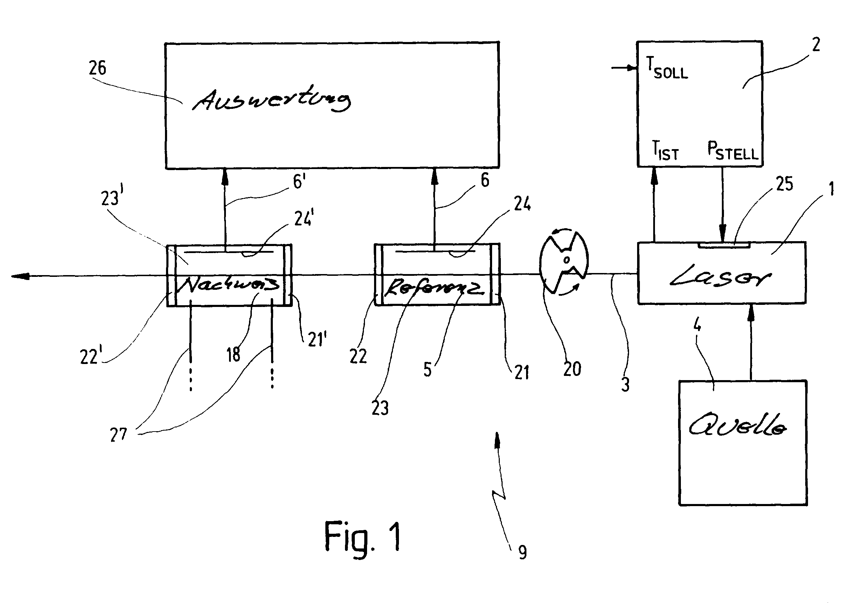

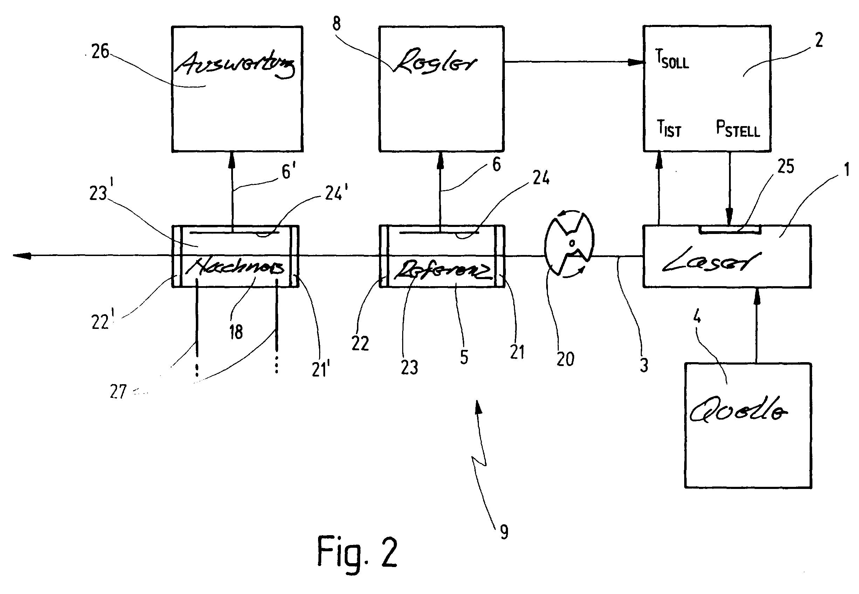

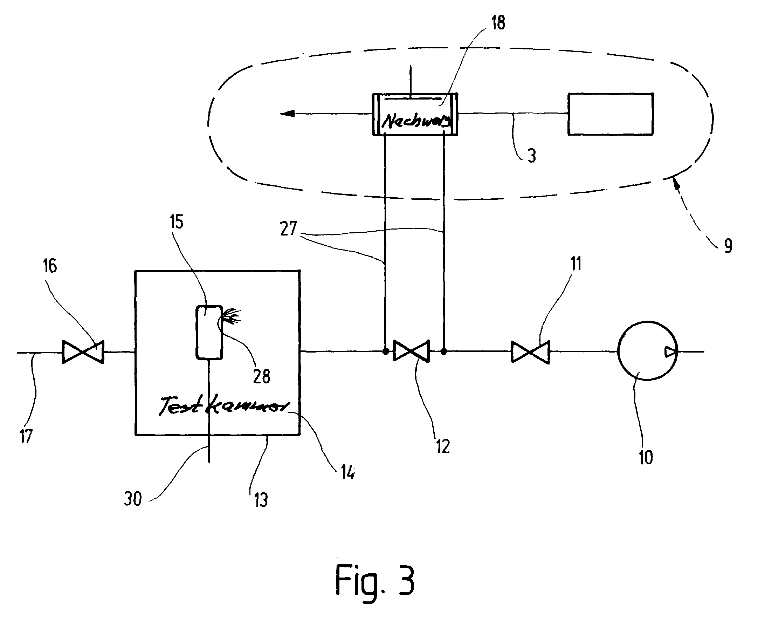

Die in den Fig. 1 und 2 dargestellten Anordnungen 9 dienen im wesentlichen der Erzeugung von Laserlicht mit definiertem Emissionsfrequenzbereich durch Einhaltung konstanter Betriebsbedingungen eines Lasers in einem photoakustischen Dichtheitsprüfsystem gemäß Fig. 3. Der vorzugsweise als Multimode-CO₂-Laser ausgebildete Laser 1 wird durch die Anregungsquelle 4 mit Energie, vorzugsweise in Form einer elektrischen Gleichstrom- oder Hochfrequenzentladung versorgt. Im Strahlengang des Laserlichts 3 befinden sich hintereinander ein mechanisches Unterbrecherrad 20, eine Referenzkammer 5 und eine Nachweiskammer 18. Die Referenzkammer 5 und die Nachweiskammer 18 sind gleich aufgebaut. Sie weisen jeweils ein Ein- und Auslaßtenster 21,22,21',22', einen mit Gas befüllbaren Innenraum 23,23' und einen im Innenraum angeordneten, als Mikrofon ausgebildeten Schallsensor 24, 24' auf. Weiter ist ein Temperaturregelkreis 2 vorgesehen, der die Lasertemperatur T_{IST} auf dem Wert T_{SOLL} hält, indem der Wärme- bzw. Kälteeintrag P_{STELL} auf den Laser 1 verändert wird. Als Stellelemente werden vorzugsweise auf der Laseroberfläche angeordnete Peltier-Elemente 25 verwendet. Weiter ist eine Auswerteschaltung 26 vorgesehen, die im Falle des Ausführungsbeispiels nach Fig. 1 mit den Ausgangssignalen 6,6' beider Schallsensoren 24,24' und im Falle der Fig. 2 nur mit dem Ausgangssignal 6' des Schallsensors 24' beaufschlagt ist. Im Falle der Fig. 2 wird das Ausgangssignal 6 des in der Referenzkammer 5 angeordneten Schallsensors 24 in einem Regler 8 zur Nachführung des Temperatursollwerts T_{SOLL} - wie nachstehend noch näher erläutert - ausgewertet.

Der Laserstrahl 3 wird durch das mechanische Unterbrecherrad 20 mit einer vorgegebenen Frequenz intensitätsmoduliert, bevor er in die Kammern 5 und 18 eintritt. Die Anregungsleistung des Lasers wird in diesem Falle über die Anregungsquelle 4 konstant gehalten. Grundsätzlich ist es auch möglich, die Intensitätsmodulation über die Anregungsquelle zu erzeugen, wobei auch in diesem Falle die mittlere Anregungsleistung (gemittelt über eine ganzzahlige Zahl von Perioden der Intensitätsmodulationsfrequenz) konstant zu halten ist.

Die Referenzkammer 5 und die Nachweiskammer 18 können mit einem Gas gefüllt werden, das gegebenenfalls einen bestimmten Anteil eines Testgases enthält. Das Testgas ist so ausgewählt, daß sein Absorptionsfrequenzband zumindest teilweise mit den Emissionsfrequenzen des Lasers 1 übereinstimmt. Die beim Durchstrahlen der Referenzkammer 5 und der Nachweiskammer 18 in dem Testgas absorbierte Strahlungsenergie führt nach dem photoakustischen Effekt zu Druckschwankungen mit der durch die Modulationsfrequenz aufgeprägten Frequenz, die an den Schallsensoren 24, 24' in elektrische Ausgangssignale umgewandelt werden können.

Die Gasfüllung der Referenzkammer 5 setzt sich zu einem geringen Teil aus dem Testgas (beispielsweise SF₆) und zu einem größeren Teil aus einem das Laserlicht nicht absorbierenden Gas, vorzugsweise Stickstoff oder Luft, zusammen. Das am Schallsensor 24 der Referenzkammer 5 abgegriffene Ausgangssignal 6 ist maximal, wenn das Emissionsfrequenzband des Lasers und das Absorptionsfrequenzband des verwendeten Testgases am besten übereinstimmen. Durch Variation der Lasertemperatur über den Temperatursoliwert T_{SOLL} wird das Ausgangssignal 6 durch Änderung der Modenstruktur im Laser 1 bei gegebener Testgaskonzentration in der Referenzkammer in weiten Grenzen geändert. Das Ausgangssignal 6 ist somit ein Maß für den augenblicklichen Betriebszustand des Lasers 1. Das variable Ausgangssignal 6 kann entweder zur Normierung der am Schallsensor 24' der Nachweiskammer abgegriffenen Meßwerte 6' in der Auswerteschaltung 26 (Fig. 1) oder zur Nachführung des Temperatursollwerts T_{SOLL} mit Hilfe des Reglers 8 (Fig. 2) verwendet werden. -

In beiden Fällen wird die Nachweiskammer 18 über die Leitungen 27 mit einem Nachweisgas gefüllt, dessen Testgaskonzentration mit der Anordnung nach Fig. 1 und 2 bestimmt werden soll. Im Falle der Fig. 1 wird das Ausgangssignal 6' zur Bestimmung der Testgaskonzentration in der Nachweiskammer 18 mit dem Ausgangssignal 6 der Referenzkammer 5 innerhalb der computergestützten Auswerteschaltung 26 ins Verhältnis gesetzt. Dadurch erhält man unabhängig vom Betriebszustand des Lasers 1 bei bekannter (kalibrierter) Testgaskonzentration in der Referenzkammer 5 eine quantitative Aussage über die Testgaskonzentration in der Nachweiskammer 18.

Bei dem Ausführungsbeispiel nach Fig. 2 wird das Ausgangssignal 6 der Referenzkammer 5 durch Nachführung des Temperatursollwerts T_{SOLL} über den Regler 8 auf einen definierten Arbeitspunkt des Lasers 1 eingeregelt, so daß die Intensität des Ausgangssignals 6' des Schallsensors 24' ein direktes Maß für die Testgaskonzentration in der Nachweiskammer 18 ist.

Bei dem in Fig. 3 schematisch dargestellten kompletten Dichtheitsprüfsystem nach dem photoakustischen Prinzip wird die Nachweiskammer 18 folgendermaßen mit Spuren des gegebenenfalls aus einem Leck 28 eines Prüfobjekts 15 austretenden Testgases befüllt: Das über den Anschluß 30 in seinem Inneren mit dem Testgas beaufschlagte Prüfobjekt 15 wird in eine Testkammer 13 eingebracht, die ein auf der Einlaßseite angeordnetes, an seinem Eingang 17 mit Umgebungsluft oder einem Spülgas beaufschlagbares Einlaßventil 16 und eine auf ihrer Auslaßseite angeordnete Vakuumpumpe 10 aufweist. Zwischen der Testkammer 13 und der Vakuumpumpe 10 befinden sich zwei hintereinander angeordnete Absperrventile 12,11, wobei das testkammerseitige Absperrventil 12 von einer an die Nachweiskammer 18 angeschlossenen Bypassleitung 27 überbrückt ist.

Der Lecktest wird hierbei wie folgt durchgeführt:
- Das Prüfobjekt 15 wird in die Testkammer 13 eingebracht und über den Anschluß 30 mit unter Druck stehendem Testgas beaufschlagt;
- sodann wird Gas aus dem Inneren 14 der Testkammer 13 mit Hilfe der Vakuumpumpe 10 bei geöffneten Ventilen 11,12 und geschlossenem Ventil 16 abgesaugt, bis der Druck in der Testkammer 13 einen vorgegebenen kleinen Wert erreicht hat;
- anschließend werden die Ventile 11,12 geschlossen und das Ventil 16 etwas später geöffnet, so daß die Testkammer 13 und die Nachweiskammer 18 mit am Anschluß 17 anstehendem Spülgas (vorzugsweise Umgebungsluft bei Atmosphärendruck) geflutet werden;
- sodann wird in der Nachweiskammer 18 die Testgaskonzentration mit der photoakustischen Anordnung 9 bestimmt.

Die Reinigung der Testkammer 13 und der Nachweiskammer 18 von nach einer Konzentrationsbestimmung noch vorhandenen Testgasrückständen erfolgt dadurch,
- daß das Testgas aus dem Prüfobjekt 15 über den Anschluß 30 entnommen oder das Prüfobjekt 15 selbst aus der Testkammer 13 entfernt wird;
- daß die Testkammer 13 und die Nachweiskammer 18 mindestens einmal bei geschlossenen Ventilen 12,16 und geöffnetem Ventil 11 evakuiert werden und sodann bei geschlossenen Ventilen 11,12 und geöffnetem Ventil 16 mit testgasfreiem Spülgas befüllt werden.

Zusammenfassend ist folgendes festzustellen: Die Erfindung betrifft ein Verfahren und eine Anordnung zur Dichtheitsprüfung von Behältern, Gehäusen und dergleichen Prüfobjekten 15. Das Prüfobjekt 15 wird mit einem unter Druck stehenden Testgas beaufschlagt. Bei Vorhandensein eines Lecks 28 entweicht aus dem Prüfojekt 15 Testgas, das in einem Untersuchungsvolumen 18 einem von einem Laser 1 emittierten, intensitätsmodulierten elektromagnetischen Wellenfeld ausgesetzt wird. Das Wellenfeld enthält Frequenzanteile, die von dem Testgas unter Erzeugung eines der Leckerkennung dienenden photoakustischen Signals absorbiert werden. Um auch bei Verwendung eines longitudinal multimodigen Lasers mit mehreren im Testgas absorbierbaren Lasermoden eine quantitative Dichtheitsprüfung durchführen zu können, wird gemäß der Erfindung vorgeschlagen, daß die Temperatur des Lasers 1 auf einen Temperatursollwert eingeregelt wird und daß die Anregungsleistung des Lasers im zeitlichen Mittel konstant gehalten wird, so daß das photoakustische Signal als Maß für die Testgaskonzentration im Untersuchungsvolumen und/oder für die Größe eines Lecks im Prüfobjekt gemessen und ausgewertet werden kann. Zur Verbesserung der Meßgenauigkeit wird zusätzlich ein Referenzvolumen 5 mit vorgegebener Testgaskonzentration dem vom Laser 1 emittierten, intensitätsmodulierten Wellenfeld ausgesetzt, wobei das in dem Referenzvolumen 5 erzeugte photoakustische Signal 6 entweder zu Normierungszwecken bei der Bestimmung der Testgaskonzentration im Untersuchungsvolumen 18 oder zur Nachführung des Temperatursollwerts T_{SOLL} des Lasers 1 auf einen vorgegebenen Arbeitspunkt verwendet wird.

## Patentansprüche

1. Verfahren zur Dichtheitsprüfung von Behältern, Gehäusen und dergleichen Prüfobjekten, bei welchem das Prüfobjekt (15) mit einem unter Druck stehenden Testgas beaufschlagt wird und bei welchem bei Vorhandensein eines Lecks (28) aus dem Prüfobjekt (15) entweichendes Testgas in einem Untersuchungsvolumen (18) einem von einem Laser (1) emittierten, intensitätsmodulierten elektromagnetischen Wellenfeld ausgesetzt wird, das Frequenzanteile enthält, die von dem Testgas unter Erzeugung eines der Leckerkennung dienenden photoakustischen Signals (6') absorbiert werden, **dadurch gekennzeichnet**, daß die Temperatur (T_{IST}) des Lasers (1) auf einen Temperatursollwert (T_{SOLL}) eingeregelt wird, und daß das photoakustische Signal (6') als Maß für die Testgaskonzentration im Untersuchungsvolumen (18) und/oder für die Größe eines Lecks (28) gemessen und ausgewertet wird.

2. Verfahren nach Anspruch 1, **dadurch gekennzeichnet**, daß die Anregungsleistung des Lasers (1) im zeitlichen Mittel konstant gehalten wird,

3. Verfahren nach Anspruch 1 oder 2, **dadurch gekennzeichnet**, daß ein longitudinal multimodiger Laser (1) verwendet wird.

4. Verfahren nach Anspruch 3, **dadurch gekennzeichnet**, daß ein Laser (1) mit mehreren im Testgas absorbierbaren Lasermoden verwendet wird.

5. Verfahren nach einem der Ansprüche 1 bis 4, **dadurch gekennzeichnet**, daß das Wellenfeld durch periodisches Ausblenden eines vom Laser (1) emittierten Laserstrahls (3) oder durch Pulsen der Anregungsleistung intensitätsmoduliert wird.

6. Verfahren nach einem der Ansprüche 1 bis 5, **dadurch gekennzeichnet**, daß der Temperatursollwert (T_{SOLL}) des Lasers (1) variiert wird und daß aus der hierdurch bedingten Intensitätsänderung des photoakustischen Signals (6') die Testgaskonzentration im Untersuchungsvolumen (18) und/oder die Größe eines Lecks (28) auch bei Vorhandensein von das Laserlicht absorbierenden Fremdgasen bestimmt wird.

7. Verfahren nach einem der Ansprüche 1 bis 6, **dadurch gekennzeichnet**, daß zusätzlich ein Referenzvolumen (5) mit vorgegebener Testgaskonzentration dem vom Laser (1) emittierten, intensitätsmodulierten Wellenfeld ausgesetzt wird, und daß das in dem Referenzvolumen (5) erzeugte photoakustische Signal (6) gemessen und zusammen mit dem im Untersuchungsvolumen (18) gemessenen, photoakustisch erzeugten Signal (6') zur Bestimmung der Testgaskonzentration im Untersuchungsvolumen (18) und/oder der Größe eines Lecks (28) ausgewertet wird.

8. Verfahren nach einem der Ansprüche 1 bis 7, **dadurch gekennzeichnet**, daß zusätzlich ein Referenzvolumen (5) mit vorgegebener Testgaskonzentration dem vom Laser (1) emittierten, intensitätsmodulierten Wellenfeld ausgesetzt wird, und daß die Intensität des im Referenzvolumen (5) erzeugten photoakustischen Signals (6) gemessen und unter Nachführung des Temperatursollwerts (T_{SOLL}) des Lasers (1) auf einen vorgegebenen Arbeitspunkt eingeregelt wird.

9. Verfahren nach Anspruch 8, **dadurch gekennzeichnet**, daß vor der Auslösung des Nachführungsvorgangs der Temperatursollwert (T_{SOLL}) des Lasers (1) variiert und dabei die Temperaturcharakteristik des im Referenzvolumen (5) erzeugten photoakustischen Signals (6) ermittelt wird und daß auf der Temperaturcharakteristik ein Arbeitspunkt für den Nachführungsvorgang festgelegt wird.

10. Verfahren nach Anspruch 8 oder 9, **dadurch gekennzeichnet**, daß als Arbeitspunkt das Intensitätsmaximum des im Referenzvolumen (5) erzeugten photoakustischen Signals (6) gewählt wird.

11. Verfahren nach einem der Ansprüche 1 bis 10, **dadurch gekennzeichnet**, daß der Temperatursollwert (T_{SOLL}) niedriger als die Umgebungstemperatur gewählt wird.

12. Verfahren nach einem der Ansprüche 1 bis 11, **dadurch gekennzeichnet**, daß die photoakustisch erzeugten Signale mit einem vorzugsweise als Mikrophon ausgebildeten Schallsensor (24,24') in elektrische Ausgangssignale (6,6') umgewandelt und unter Bestimmung ihrer Intensität ausgewertet werden.

13. Anordnung zur Dichtheitsprüfung von Behältern, Gehäusen und dergleichen Prüfobjekten (15), die mit einem unter Druck stehenden Testgas beaufschlagbar sind, mit einer Nachweiskammer (18) zur Aufnahme von im Leckfalle Testgas enthaltenden Umgebungsgasen des jeweiligen Prüfobjekts (15), mit einem Laser (1) zur Erzeugung eines die Nachweiskammer (18) durchsetzenden, intensitätsmodulierten Laserstrahls (3), mit einem in der Nachweiskammer (18) angeordneten Schallsensor (24') zur Messung von in der Nachweiskammer (18) erzeugten photoakustischen Signalen (6'), mit einem Regelkreis (2) zur Regelung der Temperatur (T_{IST}) des Lasers (1) nach Maßgabe eines vorgegebenen Temperatursollwerts (T_{SOLL}).

14. Anordnung nach Anspruch 13, **gekennzeichnet durch** eine Einrichtung (4) zur Einstellung einer im zeitlichen Mittel konstanten Anregungsleistung für den Laser (1).

15. Anordnung nach Anspruch 13 oder 14, **dadurch gekennzeichnet**, daß der Temperatur-Regelkreis (2) mindestens ein auf der Laseroberfläche angeordnetes, vorzugsweise als Peltier-Element (25) ausgebildetes thermoelektrisches Element als Stellglied enthält.

16. Anordnung nach einem der Ansprüche 13 bis 15, **gekennzeichnet durch** eine von dem intensitätsmodulierten Laserstrahl (3) durchsetzte Referenzkammer (5) zur Aufnahme von Testgas in definierter Konzentration, in der ein weiterer Schallsensor (24) zur Messung von photoakustischen Signalen (6) angeordnet ist.

17. Anordnung nach Anspruch 16, **gekennzeichnet durch** eine mit den Ausgangssignalen (6,6') der Schallsensoren (24,24') beaufschlagbare Auswerteeinrichtung (26) zur Bestimmung der Testgaskonzentration in der Nachweiskammer (18) und/ oder der Größe eines Lecks (28) im Prüfobjekt (15).

18. Anordnung nach Anspruch 16 oder 17, **gekennzeichnet durch** einen Regelkreis (8) zur Nachführung des Temperatursollwerts (T_{SOLL}) des Lasers (1) nach Maßgabe einer Abweichung der Intensität des am Schallsensor (24) der Referenzkammer (5) abgegriffenen Ausgangssignals (6) vom Intensitätswert eines vorgegebenen Arbeitspunkts.

19. Anordnung nach Anspruch 18, **dadurch gekennzeichnet**, daß der Arbeitspunkt dem als Funktion der Lasertemperatur erzielbaren Intensitätsmaximum des in der Referenzkammer (5) erzeugten photoakustischen Signals (6) entspricht.

20. Anordnung nach Anspruch 18 oder 19, **dadurch gekennzeichnet**, daß der Regelkreis (8) einen PID-Regler enthält.

21. Anordnung nach einem der Ansprüche 16 bis 20, **dadurch gekennzeichnet**, daß die Nachweiskammer (18) im Strahlengang des Laserstrahls (3) hinter der Referenzkammer (5) angeordnet ist.

22. Anordnung nach einem der Ansprüche 16 bis 21, **dadurch gekennzeichnet**, daß die Referenzkammer (5) und die Nachweiskammer (18) gleich aufgebaut sind und das gleiche Innenvolumen enthalten.

23. Anordnung nach einem der Ansprüche 13 bis 22, **gekennzeichnet durch** eine einen Gaseinlaß und einen Gasauslaß aufweisende Testkammer (13) zur Aufnahme des mit dem Testgas beaufschlagbaren Prüfobjekts (15), ein auf der Einlaßseite der Testkammer (13) angeordnetes, eingangsseitig mit Umgebungsluft oder einem Spülgas beaufschlagbares Einlaßventil (16), eine auf der Auslaßseite der Testkammer (13) angeordnete Vakuumpumpe (10), zwei zwischen der Testkammer (13) und der Vakuumpumpe (10) hintereinander angeordnete Absperrventile (11,12) und eine das testkammerseitige Absperrventil (12) überbrückende, an die Nachweiskammer (18) angeschlossene Bypassleitung (27).

## Claims

1. A method for testing the leak tightness of containers, housings, and similar test objects, in which the test object (15) is subjected to a pressurized test gas and in which, in the instance of a leak (28), test gas escaping from the test object (15) is subjected to an intensity-modulated electromagnetic radiation field emitted by a laser (1), which field has frequencies which are absorbed by the test gas, which causes a photo-acoustic signal (6') serving to indicate a leak to be emitted, characterized in that the temperature (T_{actual}) of the laser (1) is governed to a temperature set value (Tₛₑₜ), and that the photo-acoustic signal (6') is measured and analyzed as a measure for the test gas concentration in the test volume (18) and/or for the size of a leak (28).

2. The method of claim 1, characterized in that the excitation power of the laser (1) is held constant over a time average.

3. The method of claim 1 or 2, characterized in that a longitudinal multi-mode laser (1) is used.

4. The method of claim 3, characterized in that a laser (1) having a plurality of laser modes absorbable by the test gas is used.

5. The method of one of claims 1 to 4, characterized in that that the intensity of the radiation field is modulated by chopping a laser beam (3) emitted by the laser (1) or by pulsing the excitation power.

6. The method of one of claims 1 to 5, characterized in that the temperature set value (Tₛₑₜ) of the laser (1) is varied, and that the change of intensity of the photo-acoustic signal (6') caused thereby is used to determine the test gas concentration in the test volume (18) and/or the size of a leak (28) even in the presence of other laser light-absorbing gases.

7. The method of one of claims 1 to 6, characterized in that an additional reference volume (5) having a given test gas concentration is subjected to the intensity-modulated radiation field emitted by the laser (1), and that the photo-acoustic signal (6) generated in the reference volume (5) is measured and analysed together with the photo-acoustically generated signal (6') which is measured in the test volume (18) in order to determine the test gas concentration in the test volume (18) and/or the size of a leak (28).

8. The method of one of claims 1 to 7, characterized in that an additional reference volume (5) having a given test gas concentration is subjected to the intensity-modulated radiation field emitted by the laser (1), and that the intensity of the photo-acoustic signal (6) generated in the reference volume (5) is measured and goverened to a given set point by adjusting the temperature set value (Tₛₑₜ) of the laser (1).

9. The method of claim 8, characterized in that the temperature set value (Tₛₑₜ) of the laser (1) is varied before effecting the adjustment and determining during this the characteristic temperature dependency of the photo-acoustic signal (6) generated in the reference volume (5), and that a set point for the adjustment is set on the temperature characteristic.

10. The method of claim 8 or 9, characterized in that the intensity maximum of the photo-acoustic signal (6) generated in the reference volume (5) is chosen as set point.

11. The method of one of claims 1 to 10, characterized in that the temperature set value (Tₛₑₜ) is chosen to be lower than the ambient temperature.

12. The method of one of claims 1 to 11, characterized in that the photo-acoustically generated signals are transformed into electrical output signals (6, 6') by means of an acoustic sensor (24, 24') which is preferably designed to be a microphone, and analyzed to determine their intensity.

13. A device for testing the leak tightness of containers, housings and similar test objects (15) which are adapted to be subjected to a pressurized test gas, comprising a detection chamber (18) for accepting ambient gases of the test object (15), which ambient gases contain test gas in the case of a leak, further comprising a laser (1) for creating an intensity-modulated laser beam (3) which passes through the detection chamber (18), further comprising an acoustic sensor (24') which is disposed within the detection chamber (18) for measuring photo-acoustic signals (6') which are generated in the detection chamber (18), and comprising a control circuit (2) for controlling the temperature (T_{actual}) of the laser (1) according to a given set temperature value (Tₛₑₜ).

14. The device of claim 13, characterized by a device (4) for adjusting the excitation power of the laser such that it is constant over a time average.

15. The device of claim 13 or 14, characterized in that the temperature control circuit (2) comprises as a control element at least one thermoelectric element which is disposed on the surface of the laser and is preferably designed to be a Peltier element (25).

16. The device of one of claims 13 to 15, characterized by a reference chamber (5) through which the intensity-modulated laser beam (3) passes, which chamber (5) is adapted to accept test gas in a defined concentration, a further acoustic sensor (24) for measuring photo-acoustic signals (6) being disposed within the chamber (5).

17. The device of claim 16, characterized by an analyzing device (26) for determining the test gas concentration in the detection chamber (18) and/or the size of a leak (28) in the test object (15), which device is adapted to be subjected to the output signals (6, 6') of the acoustic sensors (24, 24').

18. The device of claim 16 or 17, characterized by a control circuit (8) for adjusting the temperature set value (Tₛₑₜ) of the laser (1) according to a deviation of the intensity of the output signal (6) of the acoustic sensor (24) of the reference chamber (5) from the intensity value of a predetermined working point.

19. The device of claim 19, characterized in that the working point corresponds to the intensity maximum of the photo-acoustic signal (6) generated in the reference chamber (5), which intensity maximum is obtainable as a function of the laser temperature.

20. The device of claim 18 or 19, characterized in that the control circuit (8) comprises a PID-controller.

21. The device of one of claims 16 to 20, characterized in that the detection chamber (18) is disposed in the beam axis of the laser beam (3) following the reference chamber (5).

22. The device of one of claims 16 to 21, characterized in that the reference chamber (5) and the detection chamber (18) are constructed identically to each other and have the same volume.

23. The device of one of claims 13 to 22, characterized by a test chamber (13) for accepting the test object (15) which is adapted to be subjected to the test gas, the test chamber having a gas inlet and a gas outlet, an inlet valve (16) which is disposed at the inlet side of the test chamber (13) and which is adapted to be subjected at its inlet side to ambient air or a scavaging gas, a vacuum pump (10) which is disposed at the outlet side of the test chamber (13), two stop valves (11, 12) which are disposed one behind the other between the test chamber (13) and the vacuum pump (10), and a bypass duct (27) which is connected to the detection chamber (18) and forms a bridge over the stop valve (12) on the test chamber side.

## Revendications

1. Procédé de contrôle de l'étanchéité de récipients, carters et objets à contrôler analogues, selon lequel l'objet à contrôler (15) est alimenté en gaz témoin sous pression et selon lequel, en présence d'une fuite (28), du gaz témoin s'échappant de l'objet à contrôler (15) est exposé, dans un volume d'analyse (18), à un champ d'ondes électromagnétiques modulé en intensité, émis par un laser (1), qui contient des parts de fréquence qui sont absorbées par le gaz témoin en produisant un signal photoacoustique (6') servant à reconnaître la fuite, **caractérisé** en ce que la température (T_{IST}) du laser (1) est réglée à une consigne de température (T_{SOLL}), et en ce que le signal photo-acoustique (6') est mesuré et interprété comme mesure de la concentration de gaz témoin dans le volume d'analyse (18) et/ou comme mesure de l'importance d'une fuite (28).

2. Procédé selon la revendication 1, **caractérisé** en ce que la puissance d'excitation du laser (1) est maintenue constante en moyenne dans le temps.

3. Procédé selon la revendication 1 ou 2, **caractérisé** en ce qu'on utilise un laser (1) longitudinalement multimode.

4. Procédé selon la revendication 3, **caractérisé** en ce qu'on utilise un laser (1) avec plusieurs modes laser pouvant être absorbés dans le gaz témoin.

5. Procédé selon une des revendications 1 à 4, **caractérisé** en ce que le champ d'ondes est modulé en intensité en diaphragmant périodiquement un faisceau laser (3) émis par le laser (1), ou en pulsant la puissance d'excitation.

6. Procédé selon une des revendications 1 à 5, **caractérisé** en ce qu'on fait varier la consigne de température (T_{SOLL}) du laser (1) et en ce que, à partir de la modification d'intensité du signal photoacoustique (6') ainsi produite, on détermine la concentration de gaz témoin dans le volume d'analyse (18) et/ou l'importance d'une fuite (28), même en présence de gaz étrangers absorbant la lumière laser.

7. Procédé selon une des revendications 1 à 6, **caractérisé** en ce qu'on expose en outre un volume de référence (5), présentant une concentration prédéfinie de gaz témoin, au champ d'ondes modulé en intensité émis par le laser (1), et en ce que le signal photoacoustique (6) produit dans le volume de référence (5) est mesuré et interprété, conjointement avec te signal produit de façon photoacoustique (6') mesuré dans le volume d'analyse (18), pour déterminer la concentration de gaz témoin dans le volume d'analyse (18) et/ou l'importance d'une fuite (28).

8. Procédé selon une des revendications 1 à 7, **caractérisé** en ce qu'on expose en outre un volume de référence (5), présentant une concentration prédéfinie de gaz témoin, au champ d'ondes modulé en intensité émis par le laser (1), et en ce que l'intensité du signal photoacoustique (6) produit dans le volume de référence (5) est mesurée et, en réajustant la consigne de température (T_{SOLL}) du laser (1), réglée à un point de travail prédéfini.

9. Procédé selon la revendication 8, **caractérisé** en ce qu'on fait varier la consigne de température (T_{SOLL}) du laser (1) avant de déclencher le processus de réajustement, et on détermine alors la courbe caractéristique de température du signal photoacoustique (6) produit dans le volume de référence (5), et en ce qu'on définit sur la courbe caractéristique de température un point de travail pour le processus de réajustement.

10. Procédé selon la revendication 8 ou 9, **caractérisé** en ce qu'on choisit comme point de travail le maximum d'intensité du signal photoacoustique (6) produit dans le volume de référence (5).

11. Procédé selon une des revendications 1 à 10, **caractérisé** en ce que la consigne de température (T_{SOLL}) est choisie inférieure à la température ambiante.

12. Procédé selon une des revendications 1 à 11, **caractérisé** en ce que les signaux produits de façon photoacoustique sont transformés en signaux de sortie électriques (6, 6') par un capteur acoustique (24, 24') réalisé de préférence sous forme de microphone, et interprétés en déterminant leur intensité.

13. Dispositif de contrôle de l'étanchéité de récipients, carters et objets à contrôler (15) analogues qui peuvent être alimentés en gaz témoin sous pression, avec une chambre de décèlement (18) pour recevoir des gaz ambiants de l'objet à contrôler (15) qui, en cas de fuite, contiennent du gaz témoin, avec un laser (1) pour produire un faisceau laser (3) modulé en intensité, traversant la chambre de décèlement (18), avec un capteur acoustique (24') disposé dans la chambre de décèlement (18) pour mesurer des signaux photoacoustiques (6') produits dans la chambre de décèlement (18), et avec un circuit de réglage (2) pour régler la température (T_{IST}) du laser (1) en fonction d'une consigne de température (T_{SOLL}) prédéfinie.

14. Dispositif selon la revendication 13, **caractérisé** par un équipement (4) pour régler une puissance d'excitation constante en moyenne dans le temps pour le laser (1).

15. Dispositif selon la revendication 13 ou 14, **caractérisé** en ce que le circuit de réglage de température (2) comprend comme organe de réglage au moins un élément thermoélectrique, disposé sur la surface du laser et réalisé de préférence sous forme d'élément Peltier (25).

16. Dispositif selon une des revendications 13 à 15, **caractérisé** par une chambre de référence (5), traversée par le faisceau laser (3) modulé en intensité et destinée à recevoir du gaz témoin en concentration définie, chambre dans laquelle est disposé un autre capteur acoustique (24) pour mesurer des signaux photoacoustiques (6).

17. Dispositif selon la revendication 16, **caractérisé** par une unité d'interprétation (26) qui peut être sollicitée par les signaux de sortie (6, 6') des capteurs acoustiques (24, 24') pour déterminer la concentration de gaz témoin dans la chambre de décèlement (18) et/ou l'importance d'une fuite (28) dans l'objet à contrôler (15).

18. Dispositif selon la revendication 16 ou 17, **caractérisé** par un circuit de réglage (8) pour réajuster la consigne de température (T_{SOLL}) du laser (1) en fonction d'un écart entre l'intensité du signal de sortie (6) prélevé au capteur acoustique (24) de la chambre de référence (5) et la valeur d'intensité d'un point de travail prédéfini.

19. Dispositif selon la revendication 18, **caractérisé** en ce que le point de travail correspond au maximum d'intensité, pouvant être obtenu en fonction de la température du laser, du signal photoacoustique (6) produit dans la chambre de référence (5).

20. Dispositif selon la revendication 18 ou 19, **caractérisé** en ce que le circuit de réglage (8) comprend un régulateur P.I.D.

21. Dispositif selon une des revendications 16 à 20, **caractérisé** en ce que la chambre de décèlement (18) est disposée après la chambre de référence (5) dans le trajet des rayons du faisceau laser (3).

22. Dispositif selon une des revendications 16 à 21, **caractérisé** en ce que la chambre de référence (5) et la chambre de décèlement (18) sont de structure identique et contiennent le même volume intérieur.

23. Dispositif selon une des revendications 13 à 22, **caractérisé** par une chambre de test (13) présentant une admission de gaz et une évacuation de gaz et destinée à recevoir l'objet à contrôler (15) pouvant être alimenté en gaz témoin, par une soupape d'admission (16), disposée du côté d'admission de la chambre de test (13) et pouvant être alimentée à son entrée en air ambiant ou en gaz de rinçage, par une pompe à vide (10) disposée du côté d'évacuation de la chambre de test (13), par deux soupapes d'isolement (11, 12) disposées l'une à la suite de l'autre entre la chambre de test (13) et la pompe à vide (10), et par une conduite de dérivation (27), qui contourne la soupape d'isolement (12), la plus proche de la chambre de test, et qui est raccordée à la chambre de décèlement (18).
